(19) Europäisches Patentamt

European Patent Office

Office européen des brevets

(11) Publication number: 0 505 898 A1

# EUROPEAN PATENT APPLICATION

(21) Application number: 92104615.7

(22) Date of filing: 17.03.92

(51) Int. Cl.5: **C08K 5/12, C08L 67/02**

(30) Priority: 18.03.91 IT MI910712

(43) Date of publication of application:
30.09.92 Bulletin 92/40

(84) Designated Contracting States:
AT BE CH DE DK ES FR GB GR IT LI LU NL SE

(71) Applicant: ISTITUTO GUIDO DONEGANI S.p.A.
4, Via Fauser
I-28100 Novara(IT)

(72) Inventor: Po', Ricardo, Dr.
20, Via Rosmini
I-28100 Novara(IT)
Inventor: Occhiello, Ernesto, Dr.
13, Corso Cavallotti
I-28100 Novara(IT)
Inventor: Giannotta, Giorgio
21, Via Pola
I-20100 Milan(IT)
Inventor: Garbassi, Fabio, Dr.
6, Via Carlo Porta
I-28100 Novara(IT)

(74) Representative: Weinhold, Peter, Dr. et al
Patentanwälte Dipl.-Ing. G. Dannenberg Dr.
P. Weinhold Dr. D. Gudel Dipl.-Ing. S.
Schubert Dr. P. Barz Siegfriedstrasse 8
W-8000 München 40(DE)

(54) Polyester compositions showing a high crystallization rate.

(57) Described are polyester compositions showing a high crystallization rate and obtainable by mixing, at elevated temperature, a polyester resin with at least one organic compound of general formula (I):

ROOC-Ar-OOC-Ar'-COO-Ar-COOR    (I)

wherein R represents hydrogen or $C_1$-$C_4$ alkyl and Ar and Ar' represent a simple or condensed aromatic radical containing from 6 to 12 carbon atoms; and cooling the mixture thus obtained to room temperature.

EP 0 505 898 A1

The present invention relates to polyester compositions showing a high crystallization rate and the process for their preparation.

More specifically, the present invention relates to polyester compositions showing a high crystallization rate and being obtainable by using, as nucleant, organic compounds of general formula (I):

ROOC-Ar-OOC-Ar'-COO-Ar-COOR      (I)

wherein R, Ar and Ar' are defined as indicated below.

Compounds of general formula (I) are well-known in the art as comonomers for the preparation of liquid crystalline polyesters and their synthesis is described, e.g., in Chemical Abstracts, vol. 97, No. 72969 (1982) and vol. 99, No. 218533 (1983) and in Makromolecular Chemistry, Rapid Commun., 6, 209 (1985).

In these references Ar' represents phenylene groups substituted in various positions or 2,6-naphthylene groups. Ar invariably is a 1,4-phenylene group and R represents hydrogen or methyl.

US-A-4,695,649 describes the preparation of di-(p-benzyloxycarbonylphenyl)isophthalate and its insect-repellent action, and the preparation of di(p-octyloxycarbonylphenyl)isophthalate and its use as plasticizer for polyamides.

It has now been found that compounds of general formula (I) surprisingly have nucleating properties with respect to polyester resins, in particular polyethylene terephthalate.

Accordingly the present invention provides polyester compositions showing a high crystalilzation rate, obtainable by (a) mixing, at elevated temperature, at least one polyester resin with at least one organic compound of general formula (I):

ROOC-Ar-OOC-Ar'-COO-Ar-COOR      (I)

wherein R represents hydrogen or $C_1$-$C_4$ alkyl (e.g. methyl or ethyl) and Ar and Ar', the same or different from each other, represent a simple or condensed aromatic radical containing from 6 to 12 carbon atoms; and (b) cooling the mixture thus obtained to room temperature.

Preferred compositions in accordance with the present invention are those obtained from compounds of general formula (I) wherein R is methyl and/or Ar and Ar' are independently selected from phenylene and naphthylene groups, particularly from 1,2-phenylene and 1,2-, 2,3- and 2,6-naphthylene groups.

Even more preferred compositions in accordance with the present invention are those which are obtainable by mixing the polyester resin(s) with from 0.5 to 10% by weight, of the total mixture, of the organic compound(s) of general formula (I).

Any polyester resin may be used in the present invention, although it is preferred to use polyethylene terephthalate resins (PET), polybutylene terephthalate resins (PBT) and/or polyethylene naphthalate resins (PEN).

The mixing of the polyester resin(s) with the nucleant(s) of general formula (I) is carried out at elevated temperature, or more specifically, at temperatures equal to or higher than the melting point of the resin(s). Temperatures ranging from 250 to 330°C are most suitable for the purposes of the present invention.

The organic compounds of general formula (I) can be obtained by the methods described in the references mentioned above. For example, these compounds can be obtained by means of the condensation reaction of an aroyl dihalide, such as aroyl dichloride ClOC-Ar'-COCl, with an aromatic acid (or corresponding aliphatic ester) containing a hydroxy substituent in one of the remaining positions of the ring, optionally in the presence of aliphatic, aromatic, chlorinated or ether-type hydrocarbon solvents, and in the presence of bases, such as acceptors for the hydrogen halides formed.

The reaction is generally carried out in anhydrous dioxane, in the presence of pyridine, or in neat pyridine. The reaction starting from the non-esterified hydroxyacid to obtain the salt of the acid is preferably carried out in a biphasic system of a chlorinated solvent (e.g. methylene chloride, chloroform or carbon tetrachloride) and aqueous alkaline solution (based on, e.g., NaOH or KOH).

The polyester compositions of the present invention are suitable for use in the production of moulded articles which can be manufactured by the conventional transformation technologies of thermoplastic polymers such as, for example, injection moulding and extrusion. For example, they can be processed in the form of films or fibres, can be used as matrices for composite materials based on fibres or inorganic charges and can also be employed in admixture with other polymers.

A process for preparing the polyester compositions of the present invention comprises:
- mixing, at elevated temperature, a polyester resin with at least one organic compound of general formula (I):

ROOC-Ar-OOC-Ar'-COO-Ar-COOR    (I)

wherein R, Ar and Ar' have the previously defined meanings; and
- cooling the mixture thus obtained to room temperature.

It is preferred to carry out the mixing stage under heat and the cooling stage in a single apparatus, such as an extruder equipped with a pelletizing head.

The examples which follow are to further illustrate and clarify the present invention but do not limit it in any way.

## EXAMPLE 1

**Preparation of dimethyl 4,4'-(terephthaloyldioxy)dibenzoate**

78.0 g of terephthaloyl chloride and 480 ml of dioxane were charged into a 1 litre flask. A solution of 116.8 g of methyl p-hydroxybenzoate in 150 ml of pyridine was added dropwise to the solution cooled to 15°C. After 6 hours of stirring at room temperature the reaction mixture was heated at reflux for 6 hours, thereafter cooled and poured into 1.2 litres of 5% HCl (aqueous solution) at 0°C.

The resulting solid precipitate was then suspended in an aqueous solution of 1% NaOH, washed with water, filtered and dried in an oven under vacuum at 50°C.

Obtained were 160.0 g (96.0%) of a powdery white solid with a melting point (m.p.) of 248°C (elemental analysis: C = 66.01%; H = 4.11%).

## EXAMPLE 2

**Preparation of dimethyl 4,4'-(isophthaloyldioxy)dibenzoate**

105.4 g of isophthaloyl chloride and 700 ml of dioxane were charged into a 2 litre flask. A solution of 155.7 g of methyl p-hydroxybenzoate in 150 ml of pyridine was added dropwise to the solution cooled to 15°C. After 6 hours of stirring at room temperature, the reaction mixture was heated at reflux for 6 hours, and thereafter cooled and poured into 1.5 litres of 7% HCl at 0°C.

The resulting solid precipitate was suspended first in 5% HCl and then in 5% NaHCO$_3$ (aqueous solution), thereafter washed with water, filtered and dried in an oven under vacuum at 50°C.

Obtained were 210.0 g (94.6%) of a powdery white solid having a m.p. of 223°C (elemental analysis: C = 66.46%; H = 4.17%).

## EXAMPLE 3

**Preparation of dimethyl 3,3'-(terephthaloyldioxy)di-2,2'-naphthoate**

40.2 g of terephthaloyl chloride and 280 ml of dioxane were charged into a 1 litre flask. A solution of 80.0 g of methyl 3-hydroxy-2-naphthoate in 70 ml of pyridine and 30 ml of dioxane was added dropwise to the solution cooled to 15°C. After 6 hours of stirring under reflux, the mixture was cooled and poured into 1.5 litres of 5% HCl at 0°C.

The resulting solid precipitate was suspended in 1% NaOH, washed with water, filtered and dried in an oven under vacuum at 60°C.

Obtained were 95.0 g (89.9%) of a powdery white solid having a m.p. of 299°C (elemental analysis: C = 71.42%; H = 4.14%).

## EXAMPLE 4

**Preparation of dimethyl 4,4'-(phthaloyldioxy)dibenzoate**

151.4 g of phthaloyl chloride and 900 ml of dioxane were charged into a 2 litre flask. A solution of 226.9 g of methyl p-hydroxybenzoate in 220 ml of pyridine and 60 ml of dioxane was added dropwise to the solution cooled to 15°C. After 4 hours of stirring under reflux, the mixture was cooled and poured into 5 litres of water at 0°C.

The resulting solid precipitate was suspended in 5% HCl, water, and finally in methanol, and thereafter filtered and dried in an oven under vacuum at 60°C.

Obtained were 292.1 g (90.2%) of a powdery white solid having a m.p. of 127°C (elemental analysis: C = 67.12%; H = 4.01%).

EXAMPLE 5

**Preparation of dimethyl 2,2'-(terephthaloyldioxy)dibenzoate**

99.7 g of methyl salicylate, 50 ml of dioxane and 67 ml of pyridine were charged into a 1 litre flask. A solution of 66.5 g of terephthaloyl chloride in 470 ml of dioxane was added dropwise to the solution cooled to 15°C. After 6 hours of stirring under reflux, the reaction mixture was cooled and poured into 1.5 litres of 5% HCl at 0°C.

The resulting solid precipitate was suspended, in the order given, in 5% HCl, 5% $NaHCO_3$, 2% KOH, water, and finally in methanol, and thereafter was filtered and dried in an oven under vacuum at 70°C.

Obtained were 102.0 g (71.9%) of an off-white powdery solid having a m.p. of 142°C (elemental analysis: C = 66.81%; H = 4.12%).

EXAMPLE 6

**Preparation of 4,4'-(terephthaloyldioxy)dibenzoic acid**

58.6 g of terephthaloyl chloride and 400 ml of dioxane were charged into a 1 litre flask. A suspension of 79.1 g of p-hydroxybenzoic acid in 120 ml of pyridine was added to the solution cooled to 15°C. After 4 hours of vigorous stirring at room temperature, the reaction mixture was heated under reflux for 16 hours and thereafter cooled and poured into 2 litres of 10% HCl at 0°C.

The resulting solid precipitate was suspended in 5% $NaHCO_3$ and then in water, whereafter it was filtered and dried in an oven under vacuum at 50°C.

Obtained were 112.3 g (95.7%) of a powdery white solid (elemental analysis: C = 64.85%; H = 3.47%).

EXAMPLE 7

**Preparation of a mixture of 4,4'-(terephthaloyldioxy)dibenzoic acid and monosodic\* 4,4'-(terephthaloyldioxy)dibenzoate**

38.1 g of p-hydroxybenzoic acid and 750 ml of NaOH (1 M) were charged into a 2 litre flask whereafter 22.1 g of terephthaloyl chloride dissolved in 300 ml of dichloroethane were added thereto dropwise and under vigorous stirring.

After 5 hours of reaction, the mixture was filtered and the solid was washed with acetone, suspended in 5% HCl, filtered again and dried under vacuum at 70°C.

Obtained were 45.9 g of a powdery white solid (elemental analysis: C = 59.8%; H = 2.9%; Na = 7.6%).

EXAMPLE 8

**Preparation of dimethyl 6,6'-(isophthaloyldioxy)-di-2,2'-naphthoate**

60.9 g of isophthaloyl chloride and 500 ml of dioxane were charged into a 1 litre flask whereafter a solution of 121.2 g of methyl 6-hydroxy-2-naphthoate in 100 ml of pyridine and 50 ml of dioxane was added dropwise to said solution. After 8 hours of stirring under reflux the mixture was cooled and poured into 1.5 litres of 5% HCl at 0°C.

The resulting solid precipitate was suspended in 5% HCl, 5% $NaHCO_3$ and finally in water whereafter it was filtered and dried in an oven under vacuum at 60°C.

Obtained were 157.4 g (98.3%) of a powdery white solid having a m.p. of 254°C.

EXAMPLES 9 - 19

The compounds of the preceding examples were mixed with a PET having a viscosity of 0.64 dl/g (Montefibre (Milan)).

The polymer, dried for 8 hours at 120°C, was premixed in dry condition with each of the above compounds in powder form in a V mixer.

After mixing for 15 minutes, 500 g of each mixture were fed into a MV19L single-screw extruder (Comacplast (VA) of Cerromaggiore, Italy) with a diameter of 19 mm and a screw length corresponding to 25 diameters.

The screw speed was fixed at 70 rpm and a thermal profile of from 250 (hopper) to 280°C (extrusion head) was adopted. The extruded product was cooled at the nozzle outlet with water and then pelletized.

Table 1 shows the relative quantities of additive for each mixture, the melting points and the inherent viscosities (measured in phenol/tetrachloroethane 60/40 at 30°C) of the materials obtained.

Table 2 shows the crystallization temperatures $T_{ch}$ and $T_{cc}$ of said mixtures, determined by differential scanning calorimetry (DSC) using a DSC7 apparatus (Perkin Elmer), and the corresponding data relating to neat PET with a viscosity of 0.64 dl/g as comparison.

There is a substantial increase in the $T_{cc}$ and a decrease in the $T_{ch}$ with respect to the unmodified material.

The $T_{cc}$ indicates the peak exothermal crystallization temperature (determined by DSC) when melting the material and subsequently slowly decreasing the temperature (10°C/min). The $T_{ch}$ indicates the peak exothermal crystallization temperature (determined by DSC) when melting the material, bringing it quickly to below its glass transition temperature to keep it amorphous, and then slowly increasing the temperature (20°C/min).

EXAMPLE 20

Crystallization kinetics of the reference PET and the composition of example 15 were obtained from DSC measurements, using the following procedure:
- the sample was heated to 280°C and kept in the molten state for 2 minutes in order to destroy any crystalline centres;
- the temperature was rapidly decreased (150°C/min) to the required values;
- at a constant temperature, the thermal exchange values were recorded in relation to the time;
- the half-crystallization time was considered to correspond to an area equal to half of the typical exothermal crystallization peak.

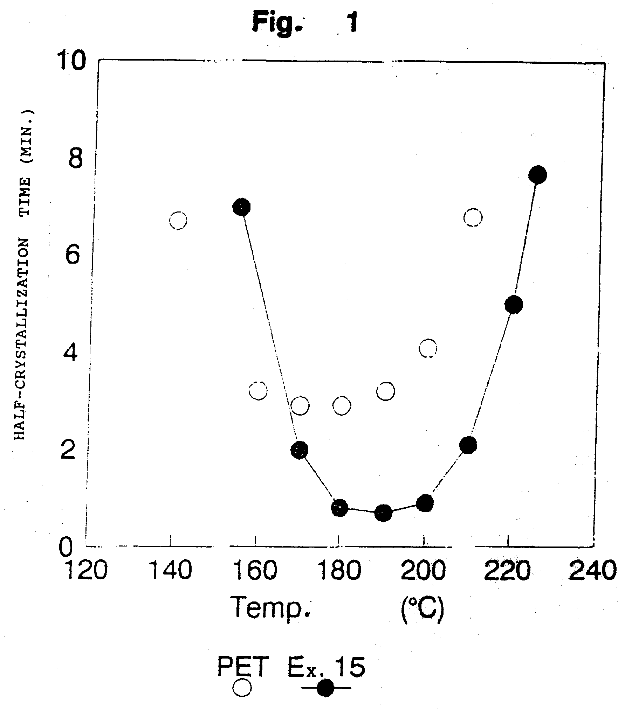

Figure 1 shows the half-crystallization times of the reference PET and the composition of example 15 in relation to the temperature. In the latter case, there is a drastic reduction of the half-crystallization time which corresponds to a significant increase in the crystallization rate. The temperature range wherein there is a high crystallization rate is also increased, resulting in advantages during moulding.

TABLE 1

| Example No. | Additive of Example No. | Amount (% by weight) | Tm (°C) | Viscosity (dl/g) |
|---|---|---|---|---|
| 9 | -- | - | 252 | 0.45 |
| 10 | 1 | 1 | 251 | 0.55 |
| 11 | 2 | 1 | 251 | 0.60 |
| 12 | 3 | 1 | 252 | 0.55 |
| 13 | 5 | 1 | 253 | 0.53 |
| 14 | 1 | 2.25 | 256 | 0.46 |
| 15 | 2 | 2.25 | 257 | 0.50 |
| 16 | 3 | 2.75 | 255 | 0.44 |
| 17 | 5 | 2.25 | 257 | 0.42 |
| 18 | 4 | 2.25 | 255 | 0.50 |
| 19 | 3 | 5 | 252 | n.d. |
| n.d. = not determined | | | | |

TABLE 2

| Example No. | $T_{ch}$ (°C) | $T_{cc}$ (°C) |
|---|---|---|
| 9 | 171 | 177 |
| 10 | 137 | 194 |
| 11 | 137 | 197 |
| 12 | 138 | 198 |
| 13 | 139 | 201 |
| 14 | 139 | 201 |
| 15 | 141 | 200 |
| 16 | 133 | 205 |
| 17 | 136 | 205 |
| 18 | 140 | 202 |
| 19 | 136 | 203 |

**Claims**

1. Polyester compositions showing a high crystallization rate, obtainable by (a) mixing, at elevated temperature, at least one polyester resin with at least one organic compound of general formula (I):

   ROOC-Ar-OOC-Ar'-COO-Ar-COOR      (I)

   wherein R represents hydrogen or $C_1$-$C_4$ alkyl and Ar and Ar', the same or different from each other, represent an optionally condensed aromatic radical containing from 6 to 12 carbon atoms;
   and (b) cooling the resulting mixture to room temperature.

2. Compositions according to claim 1, wherein R represents methyl and/or Ar and Ar' are independently selected from (preferably 1,2-)phenylene and (preferably 1,2-, 2,3- or 2,6-)naphthylene.

3. Compositions according to any one of claims 1 and 2, wherein the compound of general formula (I) has been added to the polyester resin in an amount of from 0.5 to 10% by weight, based on the total mixture.

4. Compositions according to any one of the preceding claims, wherein the polyester resin is selected from polyethylene terephthalate (PET), polybutylene terephthalate (PBT), polyethylene naphthalate (PEN) and mixtures thereof.

5. Compositions according to any one of the preceding claims, wherein the mixing of polyester resin and compound of general formula (I) has been carried out at temperatures at which the resin is in the molten state.

6. Use of the compositions according to any one of the preceding claims for the manufacture of moulded articles.

7. Process for the preparation of the polyester compositions according to any one of claims 1 to 5, comprising the steps of
   - mixing, at elevated temperature, at least one polyester resin with at least one organic compound of general formula (I) as defined in claim 1; and
   - cooling the mixture thus obtained to room temperature.

8. Process according to claim 7, wherein the mixing and the cooling are carried out in an extruder, particularly an extruder equipped with a pelletizing head.

9. Molded articles, obtainable from the compositions of any one of claims 1 to 5.

10. Molded articles according to claim 9, obtained by injection molding or extrusion.

Fig. 1

PET ○   Ex. 15 ●

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | PATENT ABSTRACTS OF JAPAN, vol. 4, no. 129 (C-24)[611], 10th September 1980; & JP-A-55 82 150 (TORAY K.K.) 20-06-1980 * Whole abstract * | 1-4,6-10 | C 08 K 5/12<br>C 08 L 67/02 |
| A | PATENT ABSTRACTS OF JAPAN, vol. 12, no. 391 (C-537)[3238], 18th October 1988; & JP-A-63 137 950 (KANEBO LTD) 09-06-1988 * Whole abstract * | 1,3-7 | |
| D,A | US-A-4 695 649 (M. MAGAMI et al.) * Abstract; column 1, lines 61 - column 2, line 10 * | 1,2 | |
| A | EP-A-0 214 581 (HOECHST AG) * Abstract; page 15, line 36 - page 16, line 14 * | 1 | |
| A | MAKROMOL. CHEMICAL, vol. 186, no. 8, August 1985, pages 1575-1591; A.Y. BILIBIN et al.: "Thermotropic polyesters, 2. Synthesis of regular polyesters from aromatic dicarboxylic acids and phenols or aliphatic diols, and study of their mesomorphic properties" * Pages 1585-1587 * | 1,2 | TECHNICAL FIELDS SEARCHED (Int. Cl.5)<br><br>C 08 K<br>C 08 L |

The present search report has been drawn up for all claims

| Place of search | Date of completion of the search | Examiner |
|---|---|---|
| THE HAGUE | 13-07-1992 | KRISCHE D.H.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)